# EUROPEAN PATENT SPECIFICATION

(11) **EP 1 504 881 B1**
(45) Date of publication and mention of the grant of the patent: **14.05.2008**
(21) Application number: 03723375.6
(22) Date of filing: 14.05.2003
(51) Int. Cl.: B29D 30/00, G09F 3/00, B65C 9/46, G06K 7/10

(54) **DEVICE AND METHOD FOR STAMPING LABEL ON TIRE**
VORRICHTUNG UND VERFAHREN ZUM AUFSTEMPELN VON ETIKETTEN AUF REIFEN
DISPOSITIF ET PROCEDE POUR POSER UNE ETIQUETTE SUR UN PNEU

(30) Priority: 14.05.2002 JP 2002137892
(43) Date of publication of application: 09.02.2005
(73) Proprietor: Bridgestone Corporation, Tokyo 104-0031 (JP)
(72) Inventor: NISHIMOTO, Kichinosuke Bridgestone Corporation Tec, Kodaira-city, Tokyo 187-0031 (JP); KOKUBU, Takao Bridgestone Corporation Tech., Kodaira-city, Tokyo 187-0031 (JP); UTIDA, Norimiti Bridgestone Corporation Tech., Kodaira-city, Tokyo 187-0031 (JP)
(74) Representative: Whalley, Kevin
(86) International application number: PCT/JP2003/005994
(87) International publication number: WO 2003/095184

(56) References cited:
- EP-A- 0 604 819
- EP-A- 0 915 328
- EP-A- 0 945 820
- JP-A- 6 239 331
- JP-A- 7 329 945
- JP-A- 11 240 524
- US-A- 5 895 552
- PATENT ABSTRACTS OF JAPAN vol. 1998, no. 14, 31 December 1998 (1998-12-31) & JP 10 254537 A (DAINIPPON PRINTING CO LTD), 25 September 1998 (1998-09-25)
- PATENT ABSTRACTS OF JAPAN vol. 2002, no. 03, 3 April 2002 (2002-04-03) & JP 2001 325019 A (SONY CORP), 22 November 2001 (2001-11-22)

## Description

The present invention relates to a labeling system and a labeling method for attaching tire identifying labels to tires in a tire producing process, such as a tire manufacturing process or a tire inspecting process.

In a process of continuously producing different types of tires, the tires must be identified so that the tires may not be subjected to wrong processes.

It is important to attach identification labels particularly to green tires before being subjected to a vulcanizing process in a tire manufacturing process to enable the accurate identification of the types of the green tires. Unless the green tires can be accurately identified, it is possible that the green tires are subjected to wrong vulcanizing processes.

The following labeling methods have been prevalently used.
(1) A first labeling method attaches labels individually printed with an identification code (barcode) to one lot of tires.
(2) A second labeling method prepares and unwinds a roll of the same labels identifying one type of tires to which the labels are to be attached among those respectively of different labels identifying different types of tires, and attaches the unwound labels to the tires.
(3) A third labeling method unwinds a roll having serially arranged series of labels respectively printed with barcodes respectively identifying tires of different sizes, and attaches the series of labels identifying tires of different sizes successively to series of tires of different sizes carried in lots discriminated by tire size.

The labeling method (1) requires grouping produced tires in lots respectively of tires of different sizes and spoils the flexibility of free production of different types of tires.

The labeling method (2) needs to prepare a number of rolls respectively of different labels corresponding to the number of types of tires to be produced, which is very disadvantageous in respect of space and amount of work needed.

The method (3) needs to change the order of the series of labels and to make a roll having series of labels arranged in another order if tires of different sizes cannot be produced in an initially scheduled order due to problems in the production lines and the schedule of production of tires is changed.

Attention is also drawn to the disclosures of EP-A-0604819; EP-A-0945820; JP-10-254537A; JP-2001-325019A; EP-A-0915328; JP-06-239331A; JP-07-329945A; US-A-5895552 and JP-11-240524A.

The present invention has been made in view of the above-described problems and it is therefore an object of the present invention to provide a labelling system capable of improving the flexibility and productivity of a tire producing line and of efficiently using space, and a labelling method to be carried out by the labelling system.

The present invention in a first aspect provides a tire labeling system comprising:
tire carrying means for successively conveying tires of different types in a tire producing process;
printing means which receives therein the tires that are conveyed by the tire carrying means and which prints tire data of the tires on labels successively;
label attaching means for attaching the labels, on which the tire data is printed, to the tires, respectively; and
label reading means for reading the tire data printed on the labels attached to the tires; characterized by:
   tire data reading means provided for reading tire data of the tires, corresponding to each of the different types, on said tire carrying means; and
   collating means for collating the tire data read from the labels attached to the tires by said label reading means with tire data read by said tire data reading means to determine if the tires are correctly labelled.

The present invention in a second aspect provides a tire labeling method of attaching labels to tires in a tire manufacturing process comprising:
successively conveying tires of different types on carrying means;
successively printing tire data of the successively conveyed tires on labels;
successively attaching the labels, on which the tire data is printed, to the successively conveyed tires, respectively; and
successively reading the tire data printed on the labels attached to the tires; characterized by the steps of:
   successively reading tire data of the tires, corresponding to each of the different types, which are on the carrying means; and
   collating the tire data read from the labels attached to the tires with the read tire data of the tires on the carrying means to determine if the tires are correctly labeled.

Preferred embodiments of the invention are the subject of the respective dependent claims.

A labeling system in a first aspect of the present invention includes: a tire data read means for reading tire data respectively on successively conveyed tires in order of conveyance in a tire producing process; a printing means for printing the tire data on the tires on labels; and a label attaching means for attaching the labels to the tires, respectively.

The labeling system includes the tire data reading means and the printing means in addition to the label attaching means, reads the tire data in order of conveyance of the tires successively delivered from a process preceding a labeling process, and prints the tire data on the labels. Therefore, the tire data on the successively delivered different types of tires are printed on the labels, respectively,in order of delivery of the different types of tires and the labels printed with the tire data specifying the different types of tires can be correctly attached to the different types of tires even if the different types of tires are conveyed in random order, and the productivity and the flexibility of the tire production line can be improved.

The tire data is printed on blank labels , printed labels do not need to be prepared beforehand, and only a single kind of blank labels can be used. Thus the labeling system is advantageous in respect of both space and amount of work.

The labeling system further includes a label reading means for reading tire data printed on the labels attached to the tires, and a collating means for collating the tire data read from the label attached to the tire by the label reading means with the tire data read by the tire data reading means. Thus, it is possible to decide whether or not the tire is correctly labeled.

The printing means may print a barcode representing the tire data. The barcode printed on the label can be quickly and accurately read, and necessary tire data can be printed on a small label.

The successively conveyed tires may be green tires individually carried by carts, respectively. The tire data reading means may be an ID card reader that reads the tire data recorded on an ID card attached to the cart. Thus the label printed with accurate tire data correctly identifying the type of the green tire can be attached to the green tire and hence it is possible to avoid subjecting the green tire to a wrong vulcanizing process.

A labeling method of attaching labels to tires in a tire manufacturing process in a second aspect of the present invention includes: a tire data reading step of reading tire data on successively conveyed tires in order of conveyance; a printing step of printing tire data on the tires on labels; and a label attaching step of attaching the label to the tire.

The tire data on the successively conveyed tires are read in order of conveyance, the read tire data are printed on the labels, respectively, and the labels are attached to the tires, respectively. Therefore, the tire data identifying the individual tires are printed on the labels, the labels can be attached correctly to the tires identified respectively by the tire data, and the flexibility of production can be ensured.

Even if individual different types of tires are conveyed successively in random order in the tire data reading step, correct labeling can be achieved.

A preferred labeling method of attaching labels to tires in a tire manufacturing process of the present invention may include: a tire data reading step of reading tire data on successively conveyed tires in order of conveyance; a label separating step of separating labels successively mounted on a supporting strip so as to extend fully across the supporting strip and separated from each other by a slit one by one from the supporting strip while the labels are being carried by the supporting strip; a label carrying step of carrying the label separated from the supporting strip at a label carrying speed higher than a moving speed at which the supporting strip moves; a printing step of printing tire data on the carried labels; and a label attaching step of attaching the printed label to the tire.

Since the labels are mounted successively on the supporting strip so as to extend fully across the supporting strip, the amount of the supporting strip to be disposed of can be reduced and material costs can be reduced.

Since the label separated from the supporting strip is carried at a high label carrying speed to a printing station where the printing step is executed, the interval between the preceding and the succeeding label increases and hence any part of data to be printed on the preceding label will not be faultily printed on the succeeding label

The invention will be further described with reference to the accompanying drawings, in which:
Fig. 1 is a schematic view of a labeling system in a preferred embodiment of the present invention applied to a tire manufacturing process;
Fig. 2 is a schematic side elevation of a label printing-and-attaching machine included in the labeling system shown in Fig. 1;
Fig. 3 is a block diagram of a control system included in the labeling system shown in Fig. 1;
Fig. 4 is a flow chart of a control procedure to be carried out by the control system shown in Fig. 3
Fig. 5 is a fragmentary perspective view of a supporting strip and labels supported on the supporting strip; and
Fig. 6 is a schematic side elevation of a label printing-and-attaching machine included in a labeling system in another embodiment of the present invention.

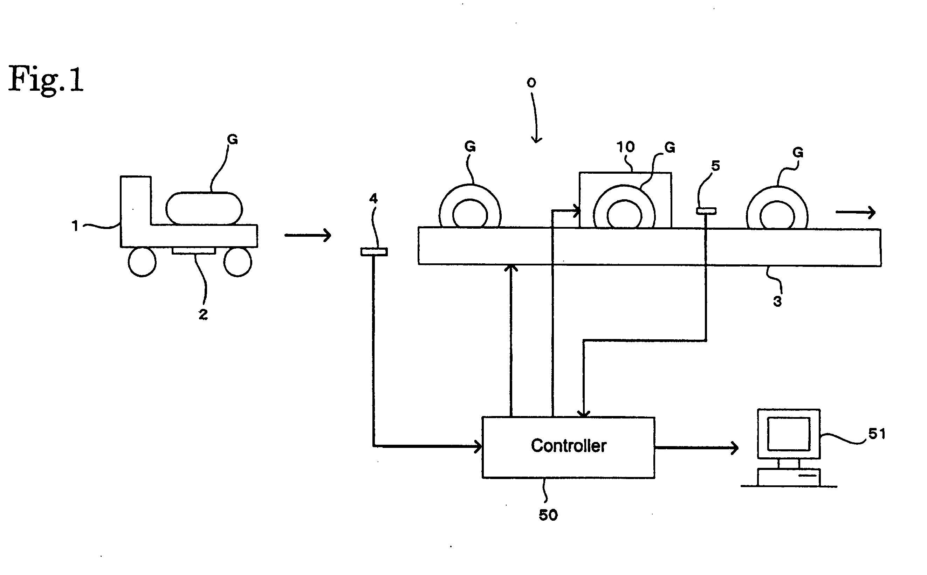

A labeling system in a preferred embodiment of the present invention will be described with reference to Figs. 1 to 4.

Fig. 1 shows a labeling system O applied to a tire manufacturing process in a schematic view.

A green tire G manufactured by a first forming process, i.e., a tire not yet vulcanized, is carried by a cart 1 to a labeling station.

Various types of green tires G manufactured by different first forming processes, respectively, are carried individually by carts 1 respectively for carrying the different types of green tires G to the labeling station. Therefore, different types of green tires G are delivered in random order to a tire conveying machine 3 installed at the labeling station.

ID cards 2 are attached to the carts 1 respectively for carrying the different types of green tires G, respectively. Data including size, material, date, serial number and such about the green tire G on the cart 1 is recorded in each ID card.

An ID card reader 4 is disposed near the tire conveying machine 3. The ID card reader 4 reads the tire data recorded on the ID card 2 attached to the cart 1 holding the green tire G when the green tire G is carried to the tire conveying machine 3.

After the ID card reader 4 has read the tire data, the green tire G is transferred from the cart 1 to the tire conveying machine 3, and the tire conveying machine 3 conveys the green tire G.

A label printing-and-attaching machine 10 is disposed at a position corresponding to a middle section of the tire conveying machine 3.

A barcode reader 5 is disposed below the label printing-and-attaching machine 10 with respect to a direction in which the tire conveying machine 3 conveys the green tire G.

The label printing-and-attaching machine 10 and the tire conveying machine 3 are controlled by a controller 50. The controller 50 makes a display 51, such as a CRT or a liquid crystal display, display results of data professing operations.

Pieces of tire data read by the ID card reader 4 and the barcode reader 5 are given to the controller 50.

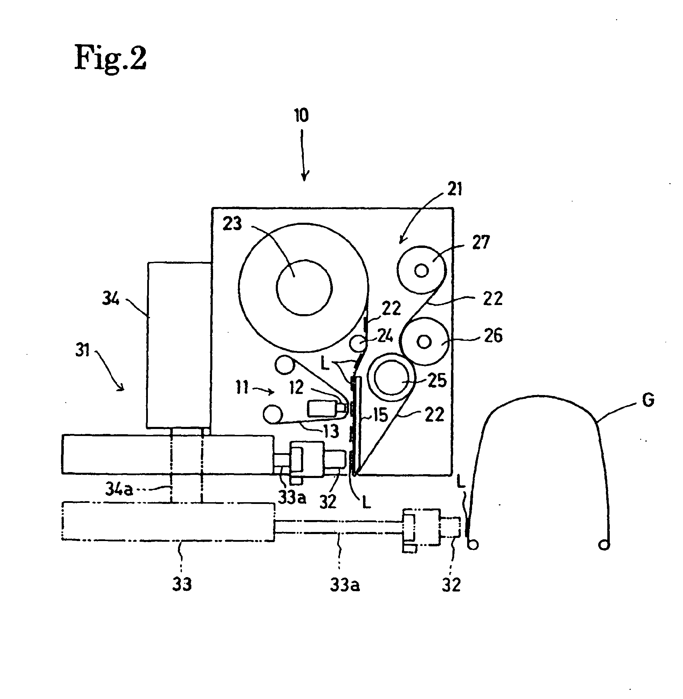

The configuration of the label printing-and-attaching machine 10 will be described with reference to Fig. 2.

The label printing-and-attaching machine 10 has a printer 11, a label feed mechanism 21 and a label attaching mechanism 31.

The printer 11 is a thermal transfer printer. The printer 11 may be any suitable printer other than the thermal transfer printer, such as an ink jet printer. An ink ribbon 13 moves through a space in front of a thermal print head included in the printer 11.

A vertical guide plate 15 is disposed opposite to the thermal print head 12.

The label feed mechanism 21 moves a supporting strip 22. Labels L are attached in a successive arrangement to a repellent front surface of the supporting strip 22. The labels L have back surfaces coated with an adhesive. The labels L are attached temporarily to the repellent front surface of the supporting strip 22 and can be released from the supporting strip 22.

The supporting strip 22 holding the blank labels L in a successive arrangement is rolled in a roll. The roll of the supporting strip 22 is held on a holding roller 23 disposed above the printer 11.

The supporting strip 22 unwound from the roll of the supporting strip 22 held on the holding roller 23 travels through an idle roller 24, is guided vertically downward by the guide plate 15, is folded back at the lower end of the guide plate 15, is pinched between a pair of unwinding rollers 25 and 26, and is taken up on a take-up roller 27.

The supporting strip 22 pinched between the unwinding rollers 25 and 26 is pulled and unwound from the roll held on the holding roller 23 by driving the unwinding roller 25. Thus the labels L are moved onto the guide plates 15.

The thermal print head 12 of the printer 11 is opposed to an upper half part of the guide plate 15. The thermal print head 12 is able to print data on a blank label L held on the supporting strip 22.

A suction pad 32 included in the label attaching mechanism 31 is disposed opposite to a lower half part of the guide plate 15. The suction pad 32 is capable of attracting a label L by suction.

The label attaching mechanism 31 includes a vacuum device for attracting a label L to the suction pad 32 by suction, a double-acting cylinder actuator 33 for advancing and retracting a rod 33a holding the suction pad at its front end, and a linear cylinder actuator 34 for advancing and retracting a rod 34 having an end joined to the double-acting cylinder actuator 33 in directions perpendicular to directions in which the rod 33 is advanced and retracted.

A label L printed with tire data by the printer 11 and held on the supporting strip 22 is advanced to a position corresponding to the lower half part of the guide plate 15. Then, the double-acting cylinder actuator 33 is actuated to take the label L off the supporting strip 22 by attracting the label L to the suction pad 32 by suction. Then, the linear cylinder actuator 34 advances the rod 34a, and the double-acting cylinder actuator 33 advances the rod 33a to attach the label L to the green tire G set at a predetermined position by pressing the label L against a predetermined part of the side wall of the green tire G near a bead as indicated by two-dot chain lines in Fig. 2.

After the label L has been attached to the green tire G, a vacuum created in the suction pad 32 is relieved, and the suction pad 32 is separated from the green tire G and is returned to its home position indicated by continuous lines in Fig. 2.

After the label L has been taken off the supporting strip 22 at the position corresponding to the lower half part of the guide plate 15, the supporting strip 22 is folded back at the lower end of the guide plate 15. The pair of unwinding rollers 25 and 26 delivers the unloaded part of the supporting strip 22 to the take-up roller 27, and the take-up roller 27 takes up the unloaded part of the supporting strip 22.

The controller 50 controls those operations of the printer 11, the label feed mechanism 21 and the label attaching mechanism 31 of the label printing-and-attaching machine 10.

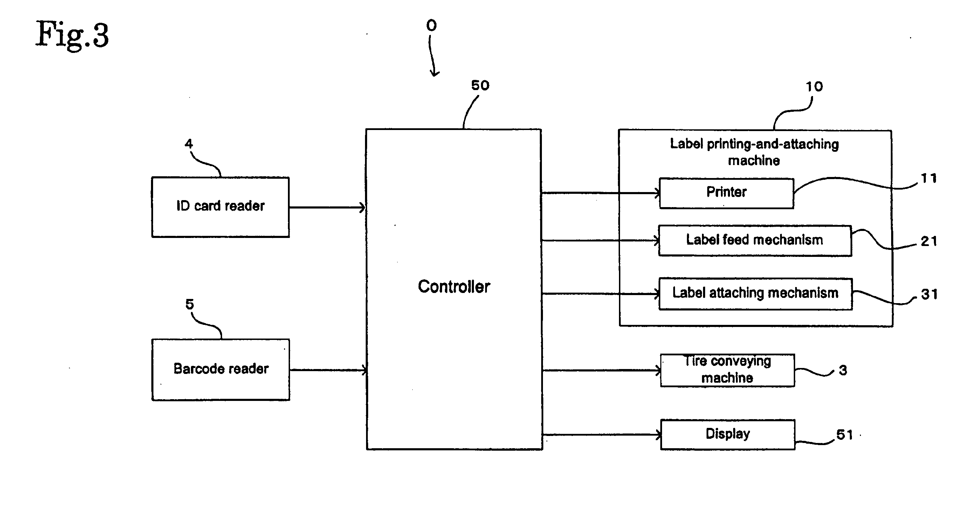

Referring to a block diagram of a control system shown in Fig. 3, the controller 50 receives and processes signals provided by the ID card reader 4 and the barcode reader 5, controls the label printing-and-attaching machine 10 and the tire conveying machine 3, and makes the display 51 display data obtained by processing the signals.

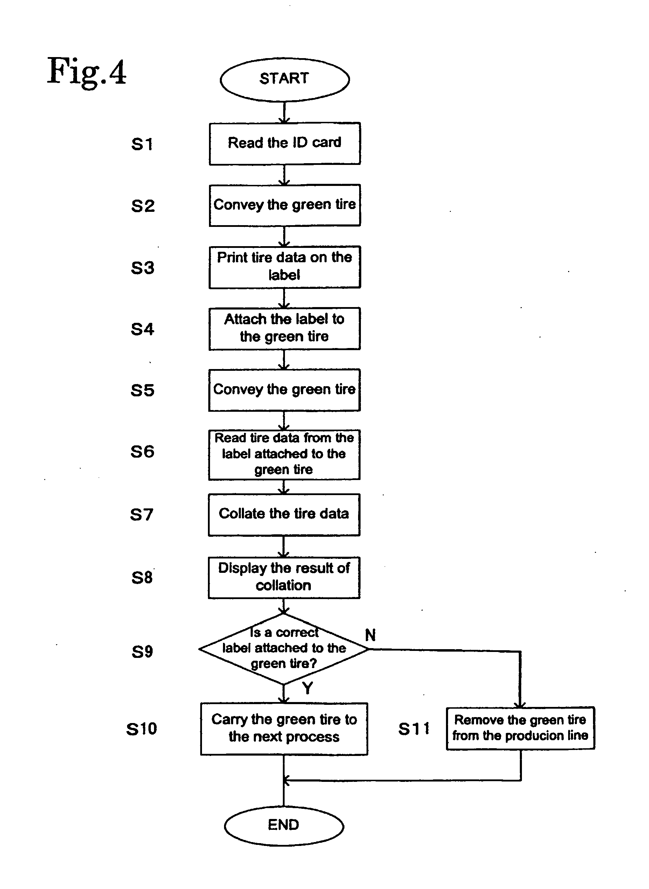

Those operations will be described with reference to Fig. 4 showing a flow chart of a control procedure to be carried out by the control system.

When the green tire G is transferred from the cart 1 to the tire conveying machine 3, the ID card reader 4 reads data on the green tire G from the ID card 2 attached to the cart 1 in step S1.

The tire conveying machine 3 conveys the green tire G in step S2, while a barcode representing tire data read by the ID card reader 4 is printed on a blank label L held on the supporting strip 22 in step S3.

When the green tire G conveyed in step 2 is set at a label attaching position in the label printing-and-attaching machine 10, the label L printed with the tire data on the green tire G is attracted to the suction pad 32, and the label attaching mechanism 31 attaches the label L to the green tire G in step S4.

Then, while the green tire G provided with the label L is being conveyed further from the label attaching position in step S5, the barcode reader 5 reads the barcode printed on the label L in step S6.

The tire data read by the barcode reader 5 is collated with the tire data on the green tire G read by the ID card reader 4 in step S7, and the result of collation is displayed by the display 51 in step S8.

A query is made in step S9 to see whether or not the tire data read by the barcode reader 5 coincides with the tire data read by the ID card reader 4. If the response to the query made in step S9 is affirmative, the control procedure goes to step S10 to carry the green tire G to the next process. If the response to the query made in step S9 is negative, the control procedure goes to step S11 to remove the green tire G from the production line.

Thus the printer 11 combined with the label attaching mechanism 31 prints the tire data on the green tire G on the label L before the label L is attached to the green tire G. Therefore, even if different types of green tires are produced in random order and are delivered to the tire conveying machine 3 in random order, a label L printed beforehand with the tire data on each green tire G is attached accurately to the green tire G specified by the tire data and hence the flexibility of production can be ensured.

Since the tire data read by the barcode reader 5 is collated with the tire data read by the ID card reader 4 for collation, it is possible to ensure that the label L printed with the correct tire data on the green tire G is attached to the same green tire G. Thus the correct labels L can be accurately attached to the green tires G.

If the timing of operation of the label feed mechanism 21 for feeding supporting strip 22 is incorrect it is possible that a wrong label L is attached to the green tire G. Such a problem never arises as long as the label feed mechanism 21 operates normally. Even if such a problem occurs by any chance, correct labels L can be attached to the relevant green tires G and the influence of the problem can be confined to the least extent by adjusting the operation of the label feed mechanism 21 upon the detection of a wrong label L. Thus the production line operates at an improved productivity.

Since the supporting strip 22 supporting blank labels L can be stored in rolls, different kinds of labels printed with different tire data do not need to be stored, which is advantageous in respect of space and amount of work.

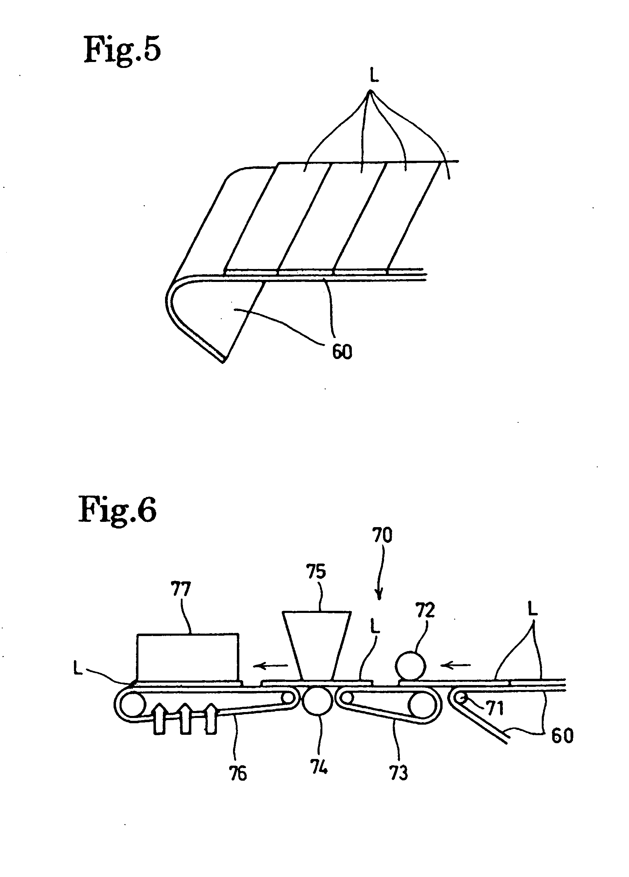

Since labels L are successively mounted on a supporting strip 60 so as to extend fully across the supporting strip 60 and separated from each other by a slit as shown in Fig. 5, the amount of the supporting strip 60 to be disposed of can be reduced to the least possible extent, the supporting strip 60 is not wasted and material costs can be reduced.

If the labels L coated with an adhesive layer are arranged continuously, and a first label L is removed from the supporting strip, a second label L contiguous with the first label L will come off the supporting strip together with the first label L because the first and the second labels L are connected by the adhesive layer or part of tire data to be printed on the label L is liable to be printed on the second label L.

A label printing-and-attaching machine 70 shown in Fig. 6 can be used to avoid such a problem.

A rolled supporting strip 60 supporting blank labels L in a successive arrangement is unrolled and is advanced in the direction of the arrows. The supporting strip 60 is wound round a small-diameter roller 71 so that only the supporting strip 60 reverses and the blank label L separates from the supporting strip 60. The blank label L separated from the supporting strip 60 is pinched between a feed roller 72 and a release conveyor belt 73 having a release outer surface and is conveyed by the conveyor belt 73.

A release platen roller 74 is disposed below the release conveyor belt 73 with respect to the moving direction of the blank label L. A print head 75 is opposed to the release platen roller 74.

The respective surface speeds of the feed roller 72 and the release conveyor belt 75 are raised temporarily immediately after the blank label being conveyed by the feed roller 72 and the release conveyor belt 73 has separated completely from the supporting strip 60. Thus the distance between the blank label L separated from the supporting strip 60 and the succeeding blank label L is increased intentionally so that the former blank label L is surely spaced apart from the succeeding blank label.

Consequently, separation of successive blank labels L from the supporting strip 60 can be avoided.

After the preceding blank label L has been spaced a predetermined distance from the succeeding blank label L, the surface speeds of the feed roller 72 and the release conveyor belt 73 are lowered to return the feed roller 72 and the release conveyor belt 73 to their normal surface speeds.

The print head 75 prints tire data on the blank label L separated from the succeeding blank label L and hence any part of the tire data to be printed on the preceding blank label L will not be printed on the succeeding blank label L.

A belt conveyor 76 having a plurality of endless belts is disposed below the release platen roller 74 with respect to the conveying direction. A suction head 77 picks up the label L printed with the tire data from the belt conveyor 76.

Air is blown through spaces between the endless belts while the belt conveyor 76 is carrying the label L printed with the tire data, and the suction head attracts the label L by suction. The suction head 77 carries the label L to and attaches the same to a green tire.

The present invention is capable of correctly attaching labels to different types of tires even if those tires are produced in random order and are subjected to labeling in random order. Naturally, the present invention is applicable to label a lot of the same type of tires.

The present invention is applicable to tire producing processes.

## Claims

1. A tire labeling system comprising:
tire carrying means (1) for successively conveying tires (G) of different types in a tire producing process;
printing means (11) which receives therein the tires (G) that are conveyed by the tire carrying means (1) and which prints tire data of the tires (G) on labels (L) successively;
label attaching means (31) for attaching the labels (L), on which the tire data is printed, to the tires (G), respectively; and
label reading means (5) for reading the tire data printed on the labels (L) attached to the tires (G); **characterized by**:
tire data reading means (4) provided for reading tire data of the tires (G), corresponding to each of the different types, on said tire carrying means (1); and
collating means (50) for collating the tire data read from the labels (L) attached to the tires (G) by said label reading means (5) with tire data read by said tire data reading means (4) to determine if the tires are correctly labeled.

2. A tire labeling system as claimed in claim 1, **characterized in that** said tire carrying means (1) has an ID card (2) for indicating tire data of tires (G) being conveyed thereon, and said tire data reading means (4) reads the tire data of the conveyed tires (G) from said ID card (2).

3. A tire labeling system as claimed in claim 2, **characterized in that** said tire carrying means (1) is a cart having thereon the ID card (2), and said tire data reading means (4) is an ID card reader.

4. A tire labeling system as claimed in any of claims 1 to 3, **characterized in that** said printing means (11) is means for printing bar codes representing tire data.

5. A tire labeling system as claimed in any of claims 1 to 4, **characterized in that** the successively conveyed tires (G) are green tires.

6. A tire labeling method of attaching labels to tires in a tire manufacturing process comprising:
successively conveying tires (G) of different types on carrying means (1);
successively printing tire data of the successively conveyed tires (G) on labels (L);
successively attaching the labels (L), on which the tire data is printed, to the successively conveyed tires (G), respectively; and
successively reading the tire data printed on the labels (L) attached to the tires (G); **characterized by** the steps of:
successively reading tire data of the tires (G), corresponding to each of the different types, which are on the carrying means (1); and
collating the tire data read from the labels (L) attached to the tires (G) with the read tire data of the tires (G) on the carrying means (1) to determine if the tires (G) are correctly labeled.

7. A tire labeling method as claimed in claim 6, **characterized in that** said step of successively reading tire data of the tires (G) on the carrying means (1) is carried out by reading tire data of the tires indicated on the carrying means (1).

8. A tire labeling method as claimed in claim 7, **characterized in that** the tires (G) of different types are conveyed on the carrying means (1) which is a cart (1) to which is attached an ID card (2) indicating tire data of the tires (G) on the cart.

9. A tire labeling method as claimed in any of claims 6 to 8, **characterized in that** the tires (G) are green tires.

10. A tire labeling method as claimed in claim 6, **characterized in that** said step of successively printing tire data of the successively conveyed tires (G) on labels (L) comprises:
supplying a supporting strip (6) on which labels (L), separated from each other by a slit one by one, are successively attached so to extend fully across the supporting strip (60);
removing the labels (L) one by one from the supporting strip (60);
conveying the labels (L) removed from the supporting strip (60) at a label carrying speed higher than a moving speed of the supporting strip (60); and
printing tire data on the labels (L) removed from the supporting strip (60).

## Patentansprüche

1. Reifenetikettiersystem, umfassend:
ein Reifentransportmittel (1) zum sukzessiven Fördern von Reifen (G) verschiedener Typen in einem Reifenherstellungsprozess;
ein Druckmittel, welches die Reifen (G) empfängt, die von dem Reifentransportmittel (1) gefördert werden, und welches Reifendaten der Reifen (G) sukzessive auf Etiketten (L) aufdruckt;
ein Etikettbefestigungsmittel (31) zum Befestigen der Etiketten (L), auf die die Reifendaten aufgedruckt sind, an den jeweiligen Reifen (G); und
ein Etikettlesemittel (5) zum Lesen der Reifendaten, die auf die Etiketten (L) aufgedruckt sind, die an den Reifen (G) befestigt sind; **gekennzeichnet durch**:
ein Reifendaten-Lesemittel (4), das zum Lesen der Reifendaten der Reifen (G), die jedem der verschiedenen Reifentypen entsprechen, auf dem Reifentransportmittel (1) vorgesehen ist; und
ein Vergleichsmittel (50) zum Vergleichen der Reifendaten, die von den Etiketten (L) gelesen wurden, die an den Reifen (G) von dem Etikettlesemittel (5) befestigt wurden, mit den Reifendaten, die von dem Reifendaten-Lesemittel (4) gelesen wurden, um zu bestimmen, ob die Reifen korrekt etikettiert sind.

2. Reifenetikettiersystem nach Anspruch 1, **dadurch gekennzeichnet, dass** das Reifentransportmittel (1) eine ID-Karte (2) zum Anzeigen der Reifendaten der auf ihm geförderten Reifen (G) aufweist, und dass das Reifendaten-Lesemittel (4) die Reifendaten der geförderten Reifen (G) von der ID-Karte (2) liest.

3. Reifenetikettiersystem nach Anspruch 2, **dadurch gekennzeichnet, dass** das Reifentransportmittel (1) ein Wagen mit der darauf befindlichen ID-Karte (2) ist, und dass das Reifendaten-Lesenüttel (4) ein ID-Kartenleser ist.

4. Reifenetikettiersystem nach einem der Ansprüche 1 bis 3, **dadurch gekennzeichnet, dass** das Druckmittel (11) ein Mittel zum Drucken von Barcodes ist, die die Reifendaten darstellen.

5. Reifenetikettiersystem nach einem der Ansprüche 1 bis 4, **dadurch gekennzeichnet, dass** die sukzessive geförderten Reifen (G) Reifenrohlinge sind.

6. Reifenetikettierverfahren zum Befestigen von Etiketten an den Reifen in einem Reifenherstellungsprozess, umfassend:
sukzessives Fördern der Reifen (G) verschiedener Typen auf dem Transportmittel (1);
sukzessives Aufdrucken der Reifendaten der sukzessive geförderten Reifen (G) auf die Etiketten (L);
sukzessives Befestigen der Etiketten (L), auf die die Reifendaten aufgedruckt sind, an den sukzessive geförderten jeweiligen Reifen (G); und
sukzessives Lesen der Reifendaten, die auf die an den Reifen (G) befestigten Etiketten (L) aufgedruckt wurden, **gekennzeichnet durch** folgende Schritte:
sukzessives Lesen der Reifendaten der Reifen (G) entsprechend jedes der verschiedenen Typen, die sich auf dem Transportmittel (1) befinden; und
Vergleich der von den Etiketten (L) gelesenen Reifendaten, wobei die Etiketten an den Reifen (G) befestigt sind, mit den gelesenen Reifendaten der Reifen (G) auf dem Transportmittel (1), um zu bestimmen, ob die Reifen (G) korrekt etikettiert sind.

7. Reifenetikettierverfahren nach Anspruch 6, **dadurch gekennzeichnet, dass** der Schritt des sukzessiven Lesens der Reifendaten der Reifen (G) auf dem Transportmittel (1) durchgeführt wird, indem die auf dem Transportmittel (1) angezeigten Reifendaten der Reifen gelesen werden.

8. Reifenetikettierverfahren nach Anspruch 7, **dadurch gekennzeichnet, dass** die Reifen (G) verschiedener Typen auf dem Transportmittel (1) gefördert werden, welches ein Wagen (1) ist, an dem eine ID-Karte (2) befestigt ist, die die Reifendaten der Reifen (G) auf dem Wagen anzeigt.

9. Reifenetikettierverfahren nach einem der Ansprüche 6 bis 8, **dadurch gekennzeichnet, dass** die Reifen (G) Reifenrohlinge sind.

10. Reifenetikettierverfahren nach Anspruch 6, **dadurch gekennzeichnet, dass** der Schritt des sukzessiven Aufdruckens der Reifendaten der sukzessive geförderten Reifen (G) auf die Etiketten (L) umfasst:
Zuführen eines Tragstreifens (6), an dem die Etiketten (L), jeweils durch einen Schlitz voneinander getrennt, sukzessive befestigt werden, derart, dass sie sich voll über den Tragstreifen (60) erstrecken;
Entfernen der Etiketten (L) nacheinander vom Tragstreifen (60);
Fördern der vom Tragstreifen entfernten Etiketten (L) mit einer Etikettentransportgeschwindigkeit, die höher als eine Bewegungsgeschwindigkeit des Tragstreifens (60) ist; und
Aufdrucken der Reifendaten auf die vom Tragstreifen (60) entfernten Etiketten (L).

## Revendications

1. Système d'étiquetage de pneus comprenant :
Un moyen de transport de pneus (1) servant à acheminer successivement des pneus (G) de différents types dans un processus de fabrication de pneus ;
Un moyen d'impression (11) qui reçoit les pneus (G) qui sont acheminés par le moyen de transport de pneus (1) et qui imprime successivement les données relatives au pneu des pneus (G) sur des étiquettes (L) ;
Un moyen de fixation d'étiquettes (31) pour fixer sur les pneus (G) respectifs les étiquettes (L) sur lesquelles les données relatives au pneu sont imprimées,; et
Un moyen de lecture d'étiquettes (5) pour lire les données relatives au pneu imprimées sur les étiquettes (L) fixées sur les pneus (G) ; **caractérisé par** :
Un moyen de lecture des données relatives au pneu (4) prévu pour lire sur ledit moyen de transport de pneus (1) les données relatives au pneu des pneus (G), correspondant à chacun des différents types; et
Un moyen de collationnement (50) pour collationner les données relatives au pneu lues par ledit moyen de lecture d'étiquettes (5) sur les étiquettes (L) fixées sur les pneus (G) avec les données relatives au pneu lues par ledit moyen de lecture de données relatives au pneu (4) pour déterminer si les pneus sont correctement étiquetés.

2. Système d'étiquetage de pneus selon la revendication 1, **caractérisé en ce que** ledit moyen de transport de pneus (1) a une carte d'identification (2) indiquant les données relatives au pneu des pneus (G) acheminés sur celui-ci, et ledit moyen de lecture des données relatives au pneu (4) lit sur ladite carte d'identification (2) les données relatives au pneu des pneus acheminés (G).

3. Système d'étiquetage de pneus selon la revendication 2, **caractérisé en ce que** ledit moyen de transport de pneus (1) est un chariot sur lequel la carte d'identification (2) est placée, et ledit moyen de lecture des données relatives au pneu (4) est un lecteur de carte d'identification.

4. Système d'étiquetage de pneus selon l'une quelconque des revendications 1 à 3, **caractérisé en ce que** ledit moyen d'impression (11) est un moyen pour imprimer des codes-barres représentant des données relatives au pneu.

5. Système d'étiquetage de pneus selon l'une quelconque des revendications 1 à 4, **caractérisé en ce que** les pneus acheminés successivement (G) sont des pneus crus.

6. Procédé d'étiquetage de pneus consistant à fixer des étiquettes sur des pneus dans un processus de fabrication de pneus comprenant :
Le fait d'acheminer successivement des pneus (G) de différents types sur un moyen de transport (1) ;
Le fait d'imprimer successivement sur des étiquettes (L) des données relatives au pneu des pneus acheminés successivement (G);
Le fait de fixer successivement sur les pneus successivement acheminés (G) les étiquettes (L), sur lesquelles les données relatives au pneu sont imprimées, respectivement ; et
Le fait de lire successivement les données relatives au pneu imprimées sur les étiquettes (L) fixées sur les pneus (G) ; **caractérisé par** les étapes consistant à :
Lire successivement les données relatives au pneu des pneus (G), correspondant à chacun des différents types, qui se trouvent sur le moyen de transport (1) ; et
Collationner les données relatives au pneu lues sur les étiquettes (L) fixées sur les pneus (G) avec les données relatives au pneu des pneus (G) lues sur le moyen de transport (1) pour déterminer si les pneus (G) sont correctement étiquetés.

7. Procédé d'étiquetage de pneus selon la revendication 6, **caractérisé en ce que** ladite étape consistant à lire successivement les données relatives au pneu des pneus (G) qui se trouvent sur le moyen de transport (1) est réalisée en lisant les données relatives au pneu des pneus indiquées sur le moyen de transport (1).

8. Procédé d'étiquetage de pneus selon la revendication 7, **caractérisé en ce que** les pneus (G) de différents types sont acheminés sur le moyen de transport (1) qui est un chariot (1) sur lequel est fixée une carte d'identification (2) indiquant les données relatives au pneu des pneus (G) qui se trouvent sur le chariot.

9. Procédé d'étiquetage de pneus selon l'une quelconque des revendications 6 à 8, **caractérisé en ce que** les pneus (G) sont des pneus crus.

10. Procédé d'étiquetage de pneus selon la revendication 6, **caractérisé en ce que** ladite étape consistant à imprimer successivement sur des étiquettes (L) les données relatives au pneus des pneus successivement acheminés (G) comprend :
Le fait de fournir une bande de support (60) sur laquelle les étiquettes (L), séparées l'une de l'autre par une fente, sont successivement fixées, une par une, de façon à occuper l'entièreté de la largeur de la bande de support (60) ;
Le fait de retirer les étiquettes (L) de la bande de support (60) une par une ;
Le fait d'acheminer les étiquettes (L) retirées de la bande de support (60) à une vitesse de transport d'étiquette plus élevée que la vitesse de déplacement de la bande de support (60) ; et
Le fait d'imprimer les données relatives au pneu sur les étiquettes (L) retirées de la bande de support (60).
